# EUROPÄISCHE PATENTSCHRIFT

(11) **EP 2 585 376 B1**
(45) Veröffentlichungstag und Bekanntmachung des Hinweises auf die Patenterteilung: **26.10.2016**
(21) Anmeldenummer: 11767892.0
(22) Anmeldetag: 09.05.2011
(51) Int. Cl.: B65B 51/14, B65B 61/18, B65B 43/46, B65B 3/04, B65B 3/02, B29C 65/78, B29C 65/04, B29C 65/08, B29C 65/38, B29C 65/18, B65B 51/22

(54) **ANLAGE ZUM VERSCHWEISSEN VON FOLIEN MIT EINEM EINSETZSTÜCK, SOWIE VERFAHREN ZUM VERSCHWEISSEN**
SYSTEM FOR WELDING FILMS WITH AN INSERT PIECE AND WELDING METHOD
INSTALLATION POUR SOUDER DES FILMS ET UNE PIÈCE RAPPORTÉE ET PROCÉDÉ DE SOUDAGE

(30) Priorität: 03.11.2010 DE 102010050136; 08.06.2010 DE 102010022980; 25.05.2010 DE 102010021385
(43) Veröffentlichungstag der Anmeldung: 01.05.2013
(73) Patentinhaber: Kiefel GmbH, 83395 Freilassing (DE)
(72) Erfinder: BREDOW, Oliver, 83233 Bernau am Chiemsee (DE); HAAS, Johann, 5203 Köstendorf (AT); HORVAT, Tibor, 83410 Laufen (DE); GSCHWENDTNER, Rupert, 83435 Bad Reichenhall (DE)
(74) Vertreter: Farago, Peter Andreas
(86) Internationale Anmeldenummer: PCT/DE2011/001047
(87) Internationale Veröffentlichungsnummer: WO 2012/006980

(56) Entgegenhaltungen:
- EP-A1- 1 780 129
- WO-A1-00/68089
- WO-A1-2006/098964
- DE-A1-102004 051 556
- JP-A- 2001 269 389

## Beschreibung

Die Erfindung betrifft eine Anlage zum Verschweißen von Folien mit einem Einsetzstück zu einem Beutel sowie ein Verfahren zum Verschweißen.

Bei der Herstellung beispielsweise von medizinischen Beuteln werden in einem ersten Arbeitsgang Schläuche oder andere Komponenten eingeschweißt. Das Einschweißen erfolgt normalerweise in Flachfolie, Schlauchfolie von der Rolle oder vom Zuschnitt. In einem zweiten Arbeitsgang, der mit dem ersten Arbeitsgang in einer gemeinsamen Verschweißstation erfolgen kann, wird anschließend die Umfangschweißung vorgenommen. Hierdurch entsteht der eigentliche Beutel.

Meistens kommen als Einsetzstück, auch "Port" genannt, Kunststoffröhrchen zum Einsatz, um eine Anschlussmöglichkeit für den Beutel bereitzustellen. Ein solches Röhrchen wird zum Einschweißen üblicherweise auf eine Mandrene aufgesteckt. "Mandrenen" werden auch als "Zentralelektroden" bezeichnet.

Ein Beispiel für ein Verschweißwerkzeug mit einer oder mehreren Zentralelektroden zum Verschweißen von Kunststoffröhrchen in Folie zeigt die WO 2007/140760 A2.

Die Zentralelektroden sind üblicherweise entweder auf einer Kette oder auf einem Drehtisch montiert. Die Kette oder der Drehtisch transportieren die Komponenten von Station zu Station, wobei über die Kette bzw. über den Drehtisch die Positionsgenauigkeit für die einzelnen Bearbeitungsstationen gewährleistet wird.

In der Regel wird ein auf diese Weise hergestellte Beutel nach dem Verschweißen mit einer Flüssigkeit befüllt, verschlossen und anschließend verpackt. Dazu wird ein solcher Beutel von einem ersten Transportsystem in ein zweites Transportsystem übergeben. Im zweiten Transportsystem, meist ebenfalls entweder eine Kette oder ein weiterer Drehtisch, erfolgt die Befüllung. Hierzu wird der Beutel zunächst von der Horizontalen in eine Schräglage oder in die Vertikale gebracht. In der neuen Ausrichtung wird der Beutel zentriert für die Befüll- oder Verschließstation.

Die EP 1 780 129 A1 offenbart eine Anlage zum Herstellen eines Beutels, wobei ein offener Mund des Beutels mit heißen Platten verschlossen wird, während Halter und bereits zusätzlich Hilfshalter den Beutel halten.

Die WO 2006/098964 A1 offenbart eine Anlage zum Herstellen und Befüllen von Beuteln, wobei zahlreiche Greifer vorbestimmte Wege fahren.

Die WO 00/68089 A1 offenbart eine Anlage zum Herstellen und Befüllen von Beuteln, wobei die Beutel horizontal geschweißt und vertikal befüllt werden.

Die DE 10 2004 051 556 A1 offenbart eine Anlage zum Herstellen von Beuteln, wobei verschiendenste Verfahren und Vorrichtungen beschrieben werden, darunter auch der Verfahrweg eines Greifers für die Folienbahn.

Der vorliegenden Erfindung liegt die Aufgabe zugrunde, die Herstellung von Beuteln in Anlagen zu verbessern.

Nach einem ersten Aspekt der vorliegenden Erfindung löst diese Aufgabe eine Anlage zum Verschweißen von Folie mit einem Einsetzstück aus Kunststoff zu einem Beutel sowie zum Befüllen des Beutels, wobei das Befüllen in einem Durchlauf durch die Anlage nach dem Verschweißen liegt, wobei zum Verschweißen ein Einsetzstückverschweißhalter in Form einer Zentralelektrode vorgesehen ist, auf welche das Einsetzstück zum Einschweißen in den Beutel aufgesteckt wird, sodass das Einsetzstück zum Verschweißen mit der Folie in Position gehalten wird, wobei für das Befüllen ein Beutelgreifer vorgesehen ist, wobei der Einsetzstückverschweißhalter und der Beutelgreifer in Baueinheit als ein kombiniertes Bauelement ausgeführt sind, mit zwei Teilen mit unterschiedlichen Funktionen, also mit einem ersten Teil zum Halten des Einsetzstücks und mit einem zweiten Teil zum Halten des Beutels, wobei innerhalb des kombinierten Bauelements vom ersten Teil zum zweiten Teil zwischen dem Verschweißen und dem Befüllen eine Übergabe erfolgt.

Begrifflich sei hierzu erläutert, dass es sich bei der "Anlage" im Allgemeinen um eine in Transportverbindung aufgestellte Anlage mit mehreren Werkzeugen und Stationen handelt. Üblicherweise beginnt die Anlage dort, wo die Folie und die Einsetzstücke zugeführt werden. Die Anlage erstreckt sich normalerweise bis zu einer Ausgabestation, an welcher die dann bereits befüllten medizinischen Beutel zur weiteren Verpackung oder bereits verpackt abgegeben werden.

Das "Verschweißen" ist üblicherweise, aber nicht zwingend, an einer Hochfrequenz-Schweißstation vorgesehen. Eine solche eignet sich besonders gut für die sichere Verbindung zwischen Kunststoffen. Weitere Beispiele sind: Thermokontaktschweißen, Ultraschallschweißen, Impulsschweißen etc.

Die "Folie" liegt normalerweise als Einzelfolie, als Folienschlauch oder als Lage von zwei oder mehr Folien vor.

Das Befüllen des Beutels wird entweder an einer anderen Station der Anlage oder an einer Station mit zweifacher Funktion vorgenommen. Üblicherweise liegt das Befüllen räumlich im Durchlauf sowie zeitlich jeweils nach dem Verschweißen. Es reicht aber schon aus, wenn das Befüllen nur hinsichtlich der Zeit nach dem Verschweißen liegt.

Der "Einsetzstückverschweißhalter" ist dazu vorgesehen, das mit der Folie zu verschweißende Einsetzstück in Position zu halten. Er hält das Einsetzstück auf einem Dorn, und eventuell kumulativ in einer Klemme, wobei der Einsetzstückverschweißhalter vor allem einen Zentralelektrodenhalter aufweisen kann. Vor allem in einer solchen Konstellation besteht der Dorn aus einer Zentralelektrode.

Ein Zentralelektrodenhalter hält eine Zentralelektrode, sodass die Zentralelektrode in das Einsetzstück einfahren kann. Dort wird es für das Verschweißen bereitgehalten.

Als "Einsetzstück" kommen Röhrchen und Schiffe aus Kunststoff in Betracht.

Der erste Aspekt der Erfindung sieht vor, dass der Einsetzstückverschweißhalter und der Beutelgreifer in Baueinheit ausgeführt sind, dass es sich also um ein Bauelement handelt, wobei dieses Bauelement ohne Weiteres mehrere Teile mit jeweils spezialisierten Funktionen hat. Entscheidend ist, dass der Einsetzstückverschweißhalter und der Beutelgreifer nicht - wie bisher bekannt - dermaßen getrennt voneinander an der Anlage angeordnet sind, dass eine Übergabe an einer Übergabestation vom einen zum anderen erfolgen muss. Der Stand der Technik wählt diesen Weg, damit die Anlage sowohl an der Verschweißstation als auch an der Station für den weiteren Bearbeitungsschritt jeweils von einem ideal positionierbaren Beutel ausgehen kann. Der vorgestellte Aspekt der Erfindung hingegen hat erkannt, dass sich diese beiden Anlagenelemente ohne Weiteres kombinieren lassen. Sofern eine Übergabe erfolgt, erfolgt diese innerhalb des kombinierten Bauteils vom ersten zum zweiten Teil.

Nach einem Aspekt, der in Kombination mit dem ersten Aspekt von Vorteil ist, löst die gestellte Aufgabe eine Anlage zum Verschweißen von Folie mit einem Einsetzstück zu einem Beutel sowie zum Befüllen des Beutels welcher in einem Durchlauf durch die Anlage nach dem Verschweißen liegt, wobei zum Verschweißen ein Einsetzstückverschweißhalter vorgesehen ist und für das Befüllen ein Beutelgreifer vorgesehen ist, wobei der Einsetzstückverschweißhalter und/oder der Beutelgreifer einen schwenkbaren Teil aufweisen oder insgesamt oder gegeneinander schwenkbar gestaltet sind.

Eine solche Gestaltung erlaubt die Umsetzung desselben Erfindungsgedankens, nämlich die Kombination eines Einsetzstückverschweißhalters, vor allem mit einem Zentralelektrodenhalter, und eines Beutelgreifers, wobei die Verschwenkung dafür sorgen kann, dass sowohl an der Verschweißstation als auch an der weiteren Bearbeitungsstation möglichst gute Arbeitsbedingungen für eben jene Station vorliegen.

Der Einsetzstückverschweißhalter und der Beutelgreifer brauchen hierzu nicht in Baueinheit ausgeführt zu sein.

Nach einem weiteren Aspekt löst die gestellte Aufgabe in Kombination mit dem ersten Aspekt der Erfindung eine Anlage zum Verschweißen von Folie mit einem Einsetzstück zu einem Beutel sowie zum Befüllen des Beutels, welcher in einem Durchlauf durch die Anlage nach dem Verschweißen liegt, wobei zum Verschweißen ein Einsetzstückverschweißhalter vorgesehen ist und für das Befüllen ein Beutelgreifer vorgesehen ist, wobei die Anlage längserstreckt aufgebaut ist, mit einer ersten und einer zweiten Seite, wobei die beiden Seiten jeweils ein lineares Transportmittel bereitstellen und stirnseitig zwischen der ersten und der zweiten Seite jeweils eine Umkehr des Transportmittels erfolgt, sodass ein einziges Transportmittel den gesamten Transport bewerkstelligt, wobei eine Verschweißstation auf der ersten und eine Befüllstation auf der zweiten Seiten angeordnet ist.

Die Anlage baut insgesamt sehr kompakt, da nur eine insgesamt längserstreckte Anlage vorhanden ist. Die meisten Prozessanlangen sind längserstreckt in ihrer Grundfläche, sodass die Anlage bei der Planung für ein Fertigungsgelände keine Sonderbehandlung benötigt.

Ein einziges Transportmittel bewerkstelligt den gesamten Transport zwischen der Verschweißstation und dem weiteren Bearbeitungsschritt. Die Station für den weiteren Bearbeitungsschritt, beispielsweise die Befüllstation, ist der Verschweißstation entgegengesetzt angeordnet, also jedenfalls auf der anderen Seite der Anlage, sodass beide Stationen gut vom Bedienpersonal erreicht werden können.

Ein Bedienpult kann dennoch auf einer Seite für beide Stationen angeordnet sein. Als "Transportmittel" kommen insbesondere Kettenschienen in Betracht. Es können vor allem herkömmliche Kettentransportschienen für den Einsetzstückverschweißhalter und/oder den Beutelgreifer vorgesehen sein.

Nach einem weiteren Aspekt, welcher ebenfalls kumulativ zum Einsatz kommen kann, löst die gestellte Aufgabe eine Anlage zum Verschweißen von Folie mit einem Einsetzstück mit einem Beutel sowie zum Befüllen des Beutels, welcher in einem Durchlauf durch die Anlage nach dem Verschweißen liegt, wobei zum Verschweißen ein Einsetzstückverschweißhalter vorgesehen ist und für das Befüllen ein Beutelgreifer vorgesehen ist, wobei der Beutelgreifer zwei unterschiedliche Haltemechanismen aufweist, vor allem einen ersten Haltemechanismus zum Verschweißen und einen zweiten Haltemechanismus zum Befüllen.

Es sei vor allem erwogen, dass zum Verschweißen ein erster Haltemechanismus vorgesehen ist, bei welchem der Beutelgreifer zum Zeitpunkt des Verschweißens ein Klemmstück in vertikaler Richtung einsetzt, um beide Folienlagen des Beutels aneinander und/oder gegenüber dem Einsetzstück zu fixieren und/oder um das Einsetzstück zu halten, während bevorzugt gleichzeitig ein Scharnier und weiteres Mittel, vor allem ein Dorn, das Klemmstück in seiner Position und/oder in seiner Ausrichtung fixieren. Der Dorn kann eine Zentralelektrode sein.

Im verschweißten Zustand wird der Beutel schon durch den Einsetzstückverschweißhalter fixiert.

Als zweiter Haltemechanismus, zum Befüllen des Beutels, sei vor allem erwogen, ein Klemmstück in horizontaler Richtung einzusetzen, insbesondere ohne den Dorn zum Fixieren des Klemmstücks, und bevorzugt stattdessen nur mit einem Scharnier. Das Klemmstück kann bei beiden Haltemechanismen dasselbe sein.

Zum Befüllen des Beutels kommt insbesondere ein Befüllen mit sterilisiertem Wasser oder anderer Flüssigkeit in Betracht.

Es wird vorgeschlagen, dass der Einsetzstückverschweißhalter einen Zentralelektrodenhalter aufweist und der Zentralelektrodenhalter und der Beutelgreifer an der Verschweißstation gemäß einer ersten Ausrichtung ausgerichtet sind, insbesondere zum Halten des Einsetzstücks in horizontaler Anordnung, sodass der Beutel in dieser Ausrichtung verschweißt werden kann, wohingegen der Beutelgreifer an einer Befüllstation eine andere Ausrichtung aufweist als an der Verschweißstation, sodass der Beutel in anderer Ausrichtung befüllt werden kann, insbesondere in schräger Ausrichtung gegenüber der Horizontalen oder in vertikaler Ausrichtung. Zusätzlich kann der Einsetzstückverschweißhalter ein Klemmstück aufweisen.

Bei herkömmlichen Anlagen ist üblicherweise der Zentralelektrodenhalter an der Verschweißstation so ausgerichtet, dass die Zentralelektroden horizontal stehen, die Kunststoffröhrchen oder die anderen Einsetzstücke also horizontal aufgeschoben werden können. Sie benötigen in dieser Orientierung keine weitere Fixierung. Außerdem werden die Folien meist in horizontaler, liegender Anordnung durch die Anlage transportiert, sodass sich eine horizontale Anordnung des Einsetzstücks zum Verschweißen empfiehlt.

Zum Befüllen des Beutels ist hingegen eine vertikale oder zumindest schräge Anordnung meist vorteilhaft, denn der Beutel muss dann nur an einem Beutelhalter an der Öffnung gehalten werden. Der Beutel hängt dann automatisch nach unten, sodass er gleich in dieser Ausrichtung vollständig befüllt und anschließend verschlossen werden kann.

Der Zentralelektrodenhalter weist bevorzugt eine durch den Beutelgreifer hindurch vorschiebbare Zentralelektrode auf. Diese sollte ebenfalls rückziehbar sein. Bei einer solchen Ausgestaltung kann der Beutelhalter vor dem Zentralelektrodenhalter angeordnet sein. Der Beutelhalter kann die Einsetzstücke aufnehmen, alleine oder gemeinsam mit dem Zentralelektrodenhalter. Dabei wird er so ausgerichtet, dass die vorschiebbare Zentralelektrode in den oder das Beutelhalter-Teil vorschiebbar ist. Dort kann die Verschweißung erfolgen.

Sobald die Zentralelektrode zurückgezogen wurde, kann der Beutelhalter-Teil eigenständig bewegt werden, insbesondere gegenüber der Horizontalen verschwenkt werden.

Der Beutelhalter weist bevorzugt eine gefederte Klemme für das Einsetzstück auf. Er kann den Beutel dann über das Einsetzstück halten.

Um eine Transportungenauigkeit des Transportsystems, beispielsweise einer Kette, eines Riemens oder eines Drehtisches, auszugleichen und zu korrigieren, wird vorgeschlagen, dass der Einsetzstückverschweißhalter bzw. der Beutelgreifer in jeder Station einzeln zentriert werden kann. Dazu wird vorgeschlagen, den Einsetzstückverschweißhalter bzw. Beutelgreifer am Transportsystem schwimmend zu montieren.

Die beschriebene Anlage kann einen Führungshalter für den Einsetzstückverschweißhalter und/oder den Beutelhalter aufweisen, welcher schwimmend an einer Transporteinrichtung gelagert ist. Es ist möglich, dass der Führungshalter eine elastomere Lagerung aufweist, insbesondere mit ei-ner Elastomerkopplung. In einer bei einem Prototypen bewährten Ausführungsform wird eine Unterlegscheibe aus Gummi verwendet.

Bevorzugt ist ein erster Klappvorgang vorgesehen, welche mittels eines Kraftgebers vor dem weiteren Bearbeitungsschritt aktiv den Beutelhalter verschwenkt.

Ebenfalls bevorzugt, aber unabhängig vom Vorstehenden, ist ein zweiter Klappvorgang vorgesehen, welcher mittels einer Kraftgebers vor dem Verschweißen und nach dem weiteren Bearbeitungsschritt den Beutelgreifer verschwenkt.

Nach einem zweiten Aspekt der Erfindung löst die gestellte Aufgabe ein Verfahren zum Verschweißen von Folie mit einem Einsetzstück aus Kunststoff zu einem Beutel sowie zum Befüllen des Beutels zeitlich nach dem Verschweißen, wobei zum Verschweißen ein Einsetzstückverschweißhalter vorgesehen ist und für das Befüllen ein Beutelgeifer vorgesehen ist, wobei sich das Verfahren dadurch kennzeichnet, dass der Einsetzstückverschweißhalter und der Beutelgreifer miteinander und mit einem Zentralelektrodenhalter vorwärts bewegt werden.

Es wurde bereits erläutert, dass dies eine Übergabe vom Einsetzstückverschweißhalter zum Beutelgreifer überflüssig macht.

Bevorzugt wird der Beutelhalter zwischen dem Verschweißen und dem Befüllen gegenüber der Horizontalen verschwenkt.

Es versteht sich, dass sich die Vorteile einer vorstehend beschriebenen Anlage oder des vorstehend beschriebenen Verfahrens unmittelbar auf die damals hergestellten Produkte auswirken, insbesondere auf Beutel, vor allem wenn diese mit einem oder mehreren eingeschweißten Kunststoff-Einsetzstücken versehen sind.

Der Beutelhalter kann bevorzugt zusätzlich mit einer Bewegungsmöglichkeit über eine weitere Achse ausgebildet sein, sodass ein fertig befüllter und verschlossener Beutel auf ein Transportband abgelegt werden kann.

Weitere optionale vorteilhafte Merkmale und Gegenstände können den abhängigen Ansprüchen entnommen werden.

Es sei darauf hingewiesen, dass im Rahmen der vorliegenden Anmeldung auf die Formulierung "mindestens ..." wann immer möglich verzichtet wurde. Stattdessen wurde wann immer möglich einfach ein unbestimmter Artikel verwendet. Der einfache Artikel "ein" ist in der gesamten Anmeldung als "mindestens ein" zu verstehen, sofern sich nicht aus dem Kontext an einer bestimmten Stelle anderweitiges ergibt.

Die Erfindung wird nachstehend anhand eines Ausführungsbeispiels unter Bezugnahme auf die Zeichnung näher erläutert. Dort zeigen
- Figur 1: schematisch in einer räumlichen Ansicht einen Zentralelektrodenhalter mit Beutelgreifer in Baueinheit an einer Befüllstation mit einem Beutel,
- Figur 2: in einer schematischen Draufsicht eine Anlage zum Herstellen und Befüllen von medizinischen Beuteln,
- Figur 3: schematisch in einer Frontalansicht einen kombinierten Einsetzstückverschweißhalter mit einem Beutelgreifer und einem schiffchenförmigen Einsetzstück,
- Figur 4: schematisch in einer Seitenansicht den kombinierten Halter aus Figur 3 mit dem schiffchenförmigen Einsetzstück,
- Figur 5: schematisch in einer Draufsicht den kombinierten Halter aus den Figuren 3 und 4 mit dem schiffchenförmigen Einsetzstück,
- Figur 6: schematisch in einer räumlichen Ansicht schräg oben von einer Rückseite den kombinierten Halter aus den Figuren 3 bis 5 mit fast vollständig verdecktem schiffchenförmigen Einsetzstück,
- Figur 7: schematisch in einer räumlichen Ansicht den kombinierten Halter aus den Figuren 3 bis 6 mit dem schiffchenförmigen Einsetzstück und Blickrichtungskennzeichnungen für die Figuren 3 bis 6, wobei in den Figuren 3 bis 7 eine Aufsteckphase für das Einsetzstück dargestellt ist,
- Figuren 8 bis 12: den kombinierten Halter mit dem schiffchenförmigen Einsetzstück in Ansichten analog zu den Figuren 3 bis 7 während eines Umfangschweißvorgangs,
- Figuren 13 bis 17: den kombinierten Halter aus den Figuren 3 bis 12 in analogen Darstellungen während eines Befüllvorgangs eines Beutels (Beutel nicht dargestellt) sowie
- Figuren 18 bis 22: den kombinierten Halter aus den Figuren 3 bis 17 in analogen Ansichten während eines Auswerfens des Beutels (Beutel nicht dargestellt).

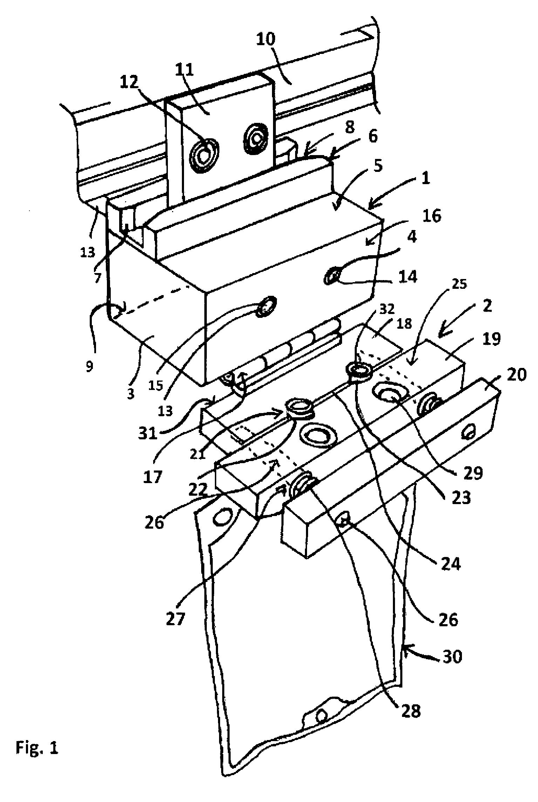

Der Zentralelektrodenhalter 1 in Figur 1 ist mit dem Beutelgreifer 2 in Baueinheit ausgeführt.

Der Zentralelektrodenhalter 1 besteht im Wesentlichen aus einem Kunststoffblock 3 mit zwei durchgehenden Bohrungen 4 (exemplarisch gekennzeichnet). Die Bohrungen 4 verlaufen im montierten Zustand an der Anlage im dargestellten Beispiel horizontal. An einer Oberseite 5 des Zentralelektrodenhalters 1 ist ein metallenes Zentrierungsbauteil 6 mit im Wesentlichen U-förmigem Profil und Abschrägungen 7 (exemplarisch gekennzeichnet) an offenen Einläufen 8 (exemplarisch gekennzeichnet) fest angeordnet.

An einer Rückseite 9 des Zentralelektrodenhalters 1 ist eine Verbindung (nicht dargestellt) zu einem Transportsystem eingerichtet, beispielsweise zu einer Kettenschiene (nicht dargestellt). Das Transportsystem führt den kombinierten Zentralelektrodenhalter 1 und Beutelgreifer 2 durch verschiedene Stationen der gesamten Anlage.

An einer Station ist über eine anlagenseitige Schiene 10 über einen Zentrierblock 11 eine genaue Bearbeitungsposition vorgegeben. Der Zentrierblock 11 ist an der Schiene 10 über Schrauben 12 (exemplarisch dargestellt) verstellbar befestigt.

Zwei Zentralelektroden 13, 14 durchlaufen die Bohrungen 4 des Zentralelektrodenhalters 1. In der in Figur 1 dargestellten Position schließen Stirnseiten 15 (exemplarisch beziffert) der Zentralelektroden 13, 14 im Wesentlich bündig mit einer Vorderseite 16 des Zentralelektrodenhalters 1 ab. Die beiden Zentralelektroden 13, 14 sind jedoch deutlich länger als die Bohrungen 4 durch den Zentralelektrodenhalter 1 hindurch, sodass sie an der Rückseite 9 des Zentralelektrodenhalters 1 deutlich aus den Bohrungen 4 herausstehen. Die Zentralelektroden 13, 14 sind in den Bohrungen 4 verschiebbar gelagert.

Es sei ausdrücklich betont, dass zwar im hier gezeigten Ausführungsbeispiel zwei Zentralelektroden beschrieben sind. Dies ist aber nicht einschränkend für die Erfindung zu verstehen. Die Erfindung ist schon mit mindestens einer Zentralelektrode von Vorteil.

Beide Zentralelektroden 13, 14 haben außerdem an ihren Stirnseiten 15 eine abgerundete, kegelige oder kegelstumpfförmige Form.

An ihrem den Stirnseiten 15 gegenüberliegenden Ende (nicht dargestellt) sind die beiden Zentralelektroden 13, 14 mit einer Führung und einem elektrischen Anschluss (beide nicht dargestellt) versehen. Bevorzugt sind die beiden Zentralelektroden über einen gemeinsamen Vorschub und einen gemeinsamen elektrischen Anschluss verbunden.

Der Beutelgreifer 2 ist mit dem Zentralelektrodenhalter 1 über ein Scharnier 17 zu einer Baueinheit verbunden.

Der Beutelgreifer 2 besteht im Wesentlichen aus einer unteren Klemmscheibe 18 und einer oberen Klemmscheibe 19 sowie einem Hubbegrenzer 20.

Die beiden Klemmscheiben 18, 19 und der Hubbegrenzer 20 sind im dargestellten Beispiel aus Kunststoff ausgeführt.

Die beiden Klemmscheiben 18, 19 weisen an zwei Klemmstellen 21 (exemplarisch beziffert) jeweils paarweise gegenüberliegende Ausnehmungen 22 (exemplarisch beziffert) auf. Die Ausnehmungen 22 greifen um zwei Kunststoffröhrchen 23 (exemplarisch beziffert) formschlüssig herum, wobei nur ein geringer Spalt 24 zwischen der unteren Klemmscheibe 18 und der oberen Klemmscheibe 19 verbleibt.

Über das Scharnier 17 lassen sich die beiden Kunststoffröhrchen 23 exakt vor die Bohrungen 4 des Zentralelektrodenhalters 1 schwenken, somit exakt vor die Stirnseiten 15 der beiden Zentralelektroden 13, 14.

Eine Innenseite 25 der beiden Klemmscheiben 18, 19 liegt dann flächig auf der Vorderseite 16 des Kunststoffblocks 3 auf.

Der Hubbegrenzer 20 ist mit der unteren Klemmscheibe 18 über zwei Fixierungen 26 (exemplarisch beziffert) in einem festen Abstand verbunden. Die Fixierungen 26 sind hierzu sowohl in der unteren Klemmscheibe 18 als auch im Hubbegrenzer 20 fest eingelassen. Sie können jedoch justierbar sein.

Auf dem Weg von der unteren Klemmscheibe 18 zum Hubbegrenzer 20 durchlaufen die Fixierungen 26 die obere Klemmscheibe 19 durch Hubbohrungen 27 (exemplarisch beziffert). Zwei Vorspannungsfedern 28 (exemplarisch beziffert) sorgen für einen ständigen Anpressdruck der oberen Klemmscheibe 19 gegen die untere Klemmscheibe 18.

Die obere Klemmscheibe 19 weist außerdem zwei Aufzieheingriffe 29 (exemplarisch beziffert) auf.

Mit den beiden Kunststoffröhrchen 23 ist ein Einzelnutzen an Foliendoppellage zu einem medizinischen Beutel 30 verschweißt.

Im Betrieb der Erfindung bringt diese erhebliche Vorteile:
Zum Herstellen des Beutels 30, der beispielsweise als Infusions-Beutel Verwendung finden kann, sollen an der Anlage im ersten Schritt zum Beispiel in Flachfolie, Schlauchfolie von der Rolle oder vom Zuschnitt Schläuche oder andere Komponenten eingeschweißt werden, im hier vorgestellten Beispiel die beiden Kunststoffröhrchen 23. Hierzu wird der kombinierte Zentralelektrodenhalter 1 und Beutelgreifer 2 zu einer Verschweißstation gefahren. Zum Verfahren dient das nicht dargestellte Transportsystem an der Rückseite 9 des Zentralelektrodenhalters 1.

Sobald dieser an der Station ankommt, läuft der Zentralelektrodenhalter 1 mit seinem Zentrierungsbauteil 6 auf den Zentrierblock 11 auf. Über die beiden zunächst ankommenden Abschrägungen 7 zentriert sich der Zentralelektrodenhalter 1 genau so wie es vom Zentrierblock 11 für die Station vorgegeben ist.

Zum Verschweißen ist der Beutelhalter 2 nach oben geschwenkt, sodass er mit seiner Innenseite 25 plan an der Vorderseite 16 des Zentralelektrodenhalters 1 anliegt.

Zu diesem Zeitpunkt sind die beiden Kunststoffröhrchen 23 bereits zwischen den beiden Klemmscheiben 18, 19 eingeklemmt.

Die beiden Kunststoffröhrchen 23 wurden in einem vorgeschalteten Schritt dorthin bestückt. Auch dazu war der Beutelgreifer 2 bevorzugt schon gegen den Zentralelektrodenhalter 1 geschwenkt. Zwei Stifte greifen zum Bestücken in die Aufzieheingriffe 29, welche hierzu bevorzugt die obere Klemmscheibe 19 vollständig durchlaufen, und ziehen die obere Klemmscheibe 19 gegen die Kraft der Vorspannungsfedern 28 zum Hubbegrenzer 20 hin.

Gleichzeitig sind beim Bestücken die beiden Zentralelektroden 13, 14 bevorzugt nach vorne mit ihren Stirnseiten 15 aus dem Kunststoffblock 3 zu dessen Vorderseite 16 hin vorgeschoben. Dadurch können die beiden Kunststoffröhrchen 23 zum Bestücken direkt auf die Zentralelektroden 13, 14 aufgesteckt werden.

Nach dem Aufstecken oder auf Wunsch auch ohne vorgeschobene Zentralelektroden 13, 14 wird die obere Klemmscheibe 19 über die Aufzieheingriffe 29 entlastet. Die beiden Vorspannungsfedern 28 drücken dann die obere Klemmscheibe 19 zur unteren Klemmscheibe 18. Hierdurch werden die beiden Kunststoffröhrchen 23 in ihrer Position fixiert - sei es mit oder ohne bereits eingeschobenen Zentralelektroden 13, 14.

Es versteht sich, dass die beiden Zentralelektroden 13, 14 spätestens zum Verschweißen in die Kunststoffröhrchen 23 eingeschoben sein müssen.

Bereits im selben Schritt wird bevorzugt die Folie mit dem Spalt 24 um die Kunststoffröhrchen 23 herum eingeklemmt, sodass alles für das Verschweißen vorbereitet ist.

Sodann wird in der Verschweißstation mittels der innerhalb der Kunststoffröhrchen 23 befindlichen Zentralelektroden 13, 14 und Gegenelektroden (nicht dargestellt) zunächst das Verschweißen der Kunststoffröhrchen 23 mit der Folie durchgeführt. Im nächsten Arbeitsgang erfolgt die Umfangsschweißung. In bestimmten Fällen können das Einschweißen der Komponenten und die Umfangsschweißung in einem Arbeitsgang erfolgen.

Nach dem Verschweißen wird der kombinierte Zentralelektrodenhalter 1 bzw. Beutelgreifer 2 mit einer Kette, einem Tablettsystem, Transport-Riemen oder einem Drehtisch zur Befüllstation transportiert. Auch dort kann eine Zentrierung für die Station mittels eines analogen Systems zum Zentrierblock vorhanden sein.

Zum Befüllen des Beutels 30 wird der Beutelgreifer 2 zunächst nach unten geschwenkt, beispielsweise in die Horizontale. Bevorzugt sind über einen Anschlag arbeitende Verschwenkungsmaßbegrenzer vorgesehen. Diese können beispielsweise an einer Unterseite 31 der unteren Klemmscheibe 18 angebracht sein oder angreifen.

Durch das Verschwenken des Beutelgreifers 2 kommt der bereits fertig gestellte Beutel 30 in eine schräge oder vertikale Position, sodass er besonders leicht mit Flüssigkeit befüllt werden kann. Die beiden Kunststoffröhrchen 23 sind durch das Aufschwenken nun an einer Befüllseite 32 (exemplarisch beziffert) frei zugänglich. Flüssigkeit kann dadurch einfach von oben durch die Kunststoffröhrchen 23 hindurch in den Beutel 30 gefüllt werden. Der Beutel 30 bleibt dabei durch die Einklemmung zwischen der oberen und der unteren Klemmscheibe 18, 19 sicher fixiert. Die beiden Vorspannungsfedern 28 sind so ausgelegt, dass sie den Beutel auch im befüllten Zustand sicher fixieren.

An der Befüllstation oder einer anderen Station können die Beutel 30 anschließend verschlossen und optional anschließend verpackt werden.

In der gewählten Ausführungsform der Erfindung wird durch das Verschwenken des Beutelgreifers 2 gegenüber dem Zentralelektrodenhalter 1 bewirkt, dass der Beutel 30 auf dem Weg von der Schweißposition in die Befüllposition nicht mehr an ein anderes Transportsystem übergeben werden muss.

Es kommt ein Antrieb mit Linearmotor zum Einsatz.

Der Zentralelektrodenhalter 1 und/oder der Beutelgreifer 2 können außerdem so beweglich gestaltet sein, dass der fertig befüllte und verschlossene Beutel auf ein Transportband abgelegt werden kann.

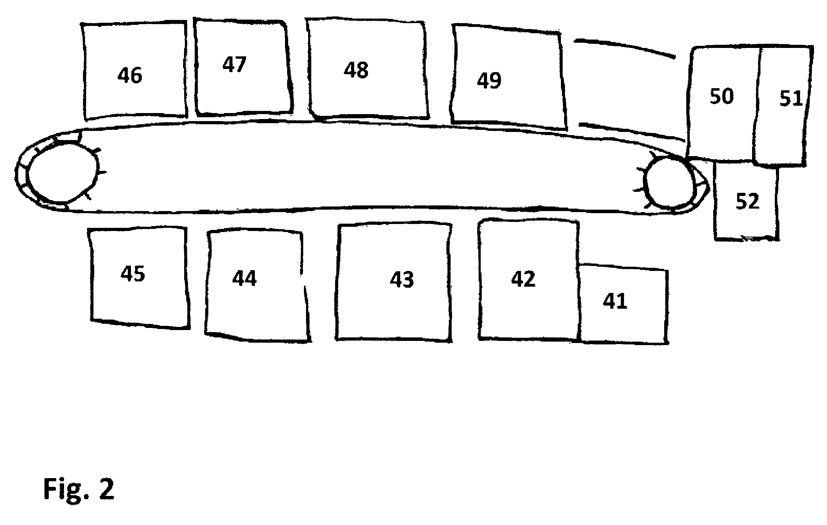

Die gesamte Anlage 40 in Figur 2 zeigt die wesentlichen Produktionsschritte schematisch in Übersicht:
- 41: Abwicklung der Komponenten
- 42: Aufstecken, Komponenten zuführen
- 43: Auswerfen und Übergeben
- 44: Ports
- 45: Befüllen
- 46: Auswerfen (ohne Befüllung)
- 47: Kühlen / Trennen
- 48: Komponenten verschweißen
- 49: Umfang verschweißen, Komponenten heften
- 50: Bedrucken
- 51: Abwickler, Tänzer, Vorformen der Folie
- 52: Komponenten vorwärmen

Sämtliche Stationen sind an einem linearen, durchgehenden Transportsystem beispielsweise in Form eines Riemens, einer Kette, eines Drehtischs oder eines Linearmotors angeordnet.

Der kombinierte Halter 50 besteht im Wesentlichen aus einem Führungshalter 51 und einem daran angesetzten schwenkbaren Teil 52.

Der Führungshalter 51 ist mit einer Nut 52 zum Positionieren auf einer Führungsschiene (nicht dargestellt) eines Transportsystems vorgesehen.

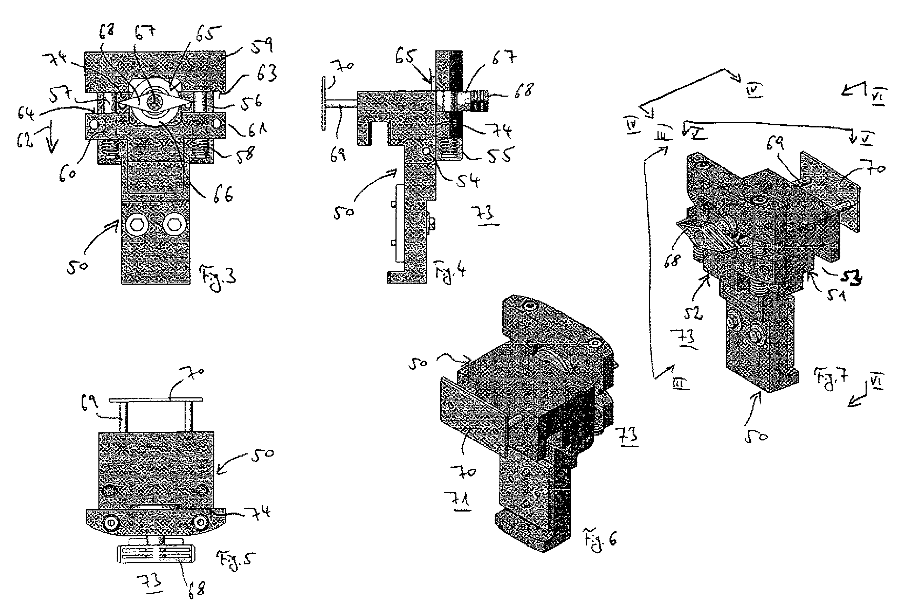

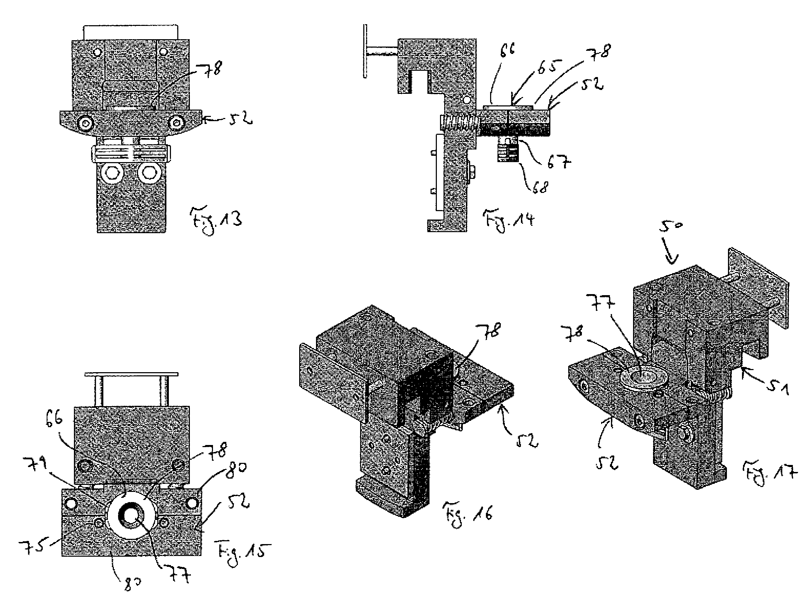

Der schwenkbare Teil 52 ist über einen Schwenkstift 54 herum schwenkbar gegenüber dem Führungshalter 51 drehbar, und zwar von einer vertikalen Position (dargestellt in den Figuren 3 bis 12) hin zu einer horizontalen Position (dargestellt in den Figuren 13 bis 22).

Der schwenkbare Teil 52 besteht zunächst aus einer Basis 55. Die Basis 55 ist über den Schwenkstift 54 direkt schwenkbar gelagert. Zwei Bolzen 56, 57 durchlaufen die Basis 55 und tragen Federn 58 (exemplarisch gekennzeichnet). Auf der gegenüberliegenden Seite - bezogen auf den Durchlauf der Bolzen 56, 57 durch die Basis 55 - münden die beiden Bolzen 56, 57 in einen Riegel 59. Der Riegel 59 ist mit den beiden Bolzen 56, 57 fest verbunden. In Durchlaufbohrungen 60 (exemplarisch gekennzeichnet) der beiden Bolzen 56, 57 durch die Basis 55, genauer durch zwei Schenkel 61 (exemplarisch gekennzeichnet) der T-förmigen Basis 55, sind die beiden Bolzen 56, 57 gleitend aufgenommen.

Das sich aus den beiden Bolzen 56, 57 und dem Riegel 59 ergebende starre U-förmige Bauteil kann somit gegenüber der Basis 55 in eine Klemmrichtung 62 und gegen die Klemmrichtung 62 linear verschoben werden, wobei die Federn 58 den Riegel 59 immer in die Klemmrichtung 62 zu bewegen versuchen. Die Federn 58 weisen im entspannten Zustand eine Länge auf, welche den Abstand zwischen zwei Anschlagflächen 63, 64 und die hierzu addierte gegenwärtige Überstehlänge der Bolzen 56, 57, verkörpert durch die aktuelle Länge der Federn 58, übersteigt, sodass die Federn 58 ständig unter Vorspannung stehen.

Mittels der Vorspannung ist ein Trägeradapter 65 zwischen dem Riegel 59 und der Basis 55 einklemmbar. Der Trägeradapter 65 besteht aus einer Klemmscheibe 66 und einem hervorstehenden Stift 67. Die Klemmscheibe 66 ist einklemmbar zwischen dem Riegel 59 und der Basis 55, oder hinten dem Riegel 59 und der Basis 55. Der Stift 67 steht orthogonal aus der Klemmscheibe 66 hervor und trägt aufgesteckt das schiffchenförmige Einsetzstück 68.

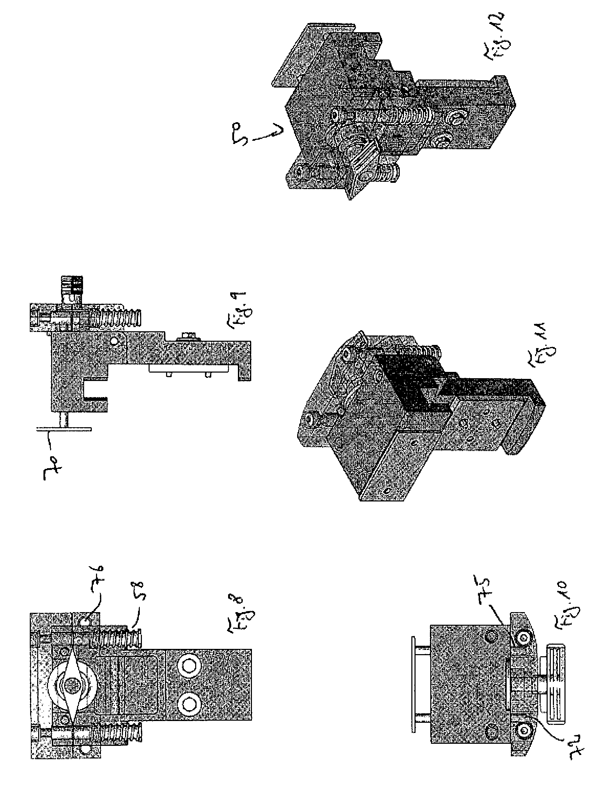

Zwei Dorne 69 (exemplarisch beziffert), verbunden über einen gemeinsamen Schieber 60, durchdringen den Führungshalter 51 horizontal von einer Rückseite 71 aus. Ihre Spitzen 72 (exemplarisch in Figur 10 dargestellt) stehen jedoch noch nicht zu einer Vorderseite 73 aus dem Führungshalter 51 hervor, sodass eine Frontfläche 74 des Führungshalters 51 plan ist. An dieser planen Frontfläche 74 liegt der schwenkbare Teil 52 an.

Eine kleine Vertiefung kann in der planen Frontfläche 74 für die Klemmscheibe 66 vorgesehen sein.

In der in den Figuren 3 bis 7 dargestellten Phase im Durchlauf durch die - nicht dargestellte - Anlage wird das schiffchenförmige Einsetzstück 68 mittels seines Trägeradapters 65 am kombinierten Halter 50 aufgesteckt.

Anders als bei der in Figur 1 dargestellten Kombination aus Zentralelektrodenhalter 1 und Beutelgreifer 2, welche ebenfalls einen kombinierten Halter geformt haben, liegen beim kombinierten Halter 50 keine Zentralelektroden vor. Vielmehr ist das schiffchenförmige Einsetzstück 68 dazu vorgesehen, ohne Zentralelektrode umfangsverschweißt zu werden, und zwar mit zwei Lagen von Folien (nicht dargestellt). Anders als beim kombinierten Halter aus Figur 1, bei welchem sowohl die Zentralelektroden 13, 14 als auch die obere Klemmscheibe 19 in Zusammenspiel mit der unteren Klemmscheibe 18 jeweils als Einsetzstückverschweißhalter fungiert haben, ist beim kombinierten Halter 50 aus den Figuren 3 bis 22 nur der vertikale Klemmmechanismus zwischen dem Riegel 59 und der Basis 55, gehalten durch den Führungshalter 51, als hauptsächlicher Einsetzstückverschweißhalter vorgesehen.

Zum Verschweißen des Umfangs (vgl. modifizierter kombinierter Halter 50 in den Figuren 8 bis 12) ist der Schieber 70 so weit zu dem Führungshalter 51 hingeschoben worden, dass die Spitzen 72 der Dornen 69 aus der planen Frontfläche 74 herausragen und in koaxial liegende Fixierungsbohrungen 75 (exemplarisch dargestellt) eingetaucht sind. Zwischen den Dornen 69 und den Fixierungsbohrungen 75 besteht wenig Spiel, sodass aufgrund der hohen Eintauchstrecke der schwenkbare Teil 52 nicht mehr von dem Führungshalter 51 weggeschwenkt werden kann.

In dieser mechanisch fixierten Form, in welcher auch eine Aufziehkraft nicht mehr auf zwei Aufziehkraftbohrungen 76 (exemplarisch gekennzeichnet) aufgebracht wird, haben die Federn 58 ihrer Vorspannung folgend den Riegel 59 bis zum Anschlag der beiden Anschlagflächen 63, 64 gegen die Basis 55 gezogen. Damit ist auch die Klemmscheibe 66 des Trägeradapters 65 fixiert.

In diesem Zustand wird der Umfang verschweißt.

Nach dem Verschweißen wird der kombinierte Halter 50 zu einer Befüllstation (nicht dargestellt) verfahren. Hierzu transportiert ihn ein Transportmittel (nicht dargestellt), beispielsweise eine Kettenschiene, mittels des Führungshalters 51 zur Befüllstation.

Entweder noch in der Verschweißstation oder auf dem Weg zur Befüllstation oder in der Befüllstation angekommen schwenkt die Anlage den schwenkbaren Teil 52 um 90 ° um den Schwenkstift 54 nach vorn, sodass der schwenkbare Teil 52 horizontal zum Liegen kommt. Die mit der Basis 55 mitgeschwenkten anderen Bestandteile, insbesondere der Riegel 59 und somit auch der Trägeradapter 65, sorgen dafür, dass der Stift 67, auf welchem das schiffchenförmige Einsetzstück 68 sitzt, nach wie vor orthogonal zum schwenkbaren Teil 52 und somit nun vertikal nach unten steht. Der mit dem schiffchenförmigen Einsetzstück 68 verschweißte Beutel (nicht dargestellt) erstreckt sich demgemäß etwa in Fortsetzung des Stifts 67, also ebenfalls nach unten.

Durch eine Einfüllöffnung 77 durch den Trägeradapter 65 hindurch und auch durch das schiffchenförmige Einsetzstück 68 hindurch kann somit an der Befüllstation mit verschwenktem schwenkbaren Teil 52 als Beutelhalter der Beutel gefüllt werden. Das resultierende Gewicht des befüllt werdenden Beutels steigt beim Befülltwerden an. Die Klemmscheibe 66 überragt allerdings mit ihrem flanschartigen Auflagerand 78 eine Öffnung 79 zwischen dem Riegel 59 und der Basis 55, sodass der befüllt werdende Beutel von der Klemmkraft nur noch unterstützend gehalten wird. Jedenfalls reicht der flanschartige Auflagerand 78, der nun auf dem Riegel 59 und der Basis 55, dort jeweils auf einer planen Auflagefläche 80 liegt, aus, um das Gewicht des befüllten Beutels zu tragen.

Der Beutel selbst kann oben zusätzlich gehalten und/oder unten zusätzlich unterstützt werden, um die Spannungen in der noch frischen Schweißung nicht zu groß werden zu lassen.

Auf diese Weise wird wie in den Figuren 13 bis 17 dargestellten Zustand der Beutel befüllt.

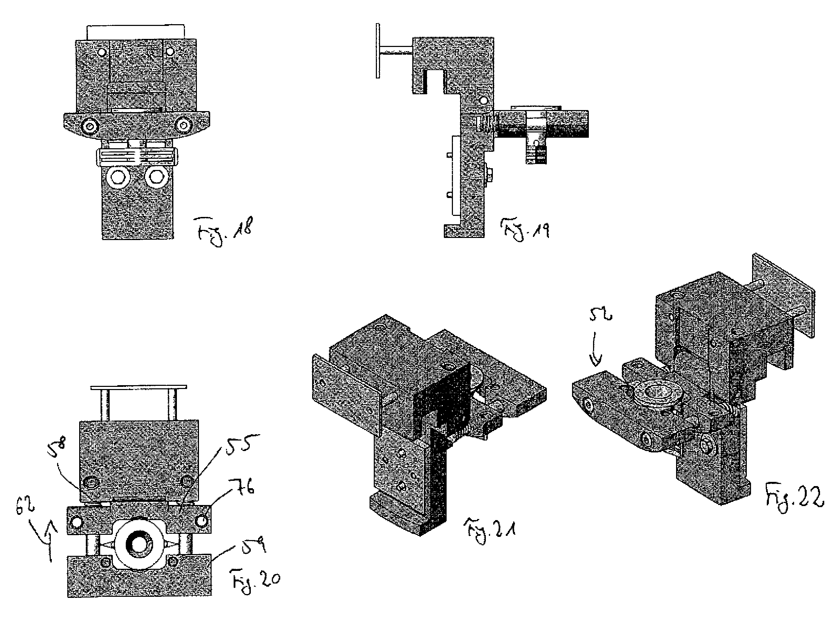

Zuletzt (vgl. Figuren 18 bis 22) greifen wieder Aufziehgreifer in die Aufziehkraftbohrungen 76 und halten somit die Basis 55 fest, während der Riegel 59 gegen die Klemmrichtung 62 aufgezogen wird, was die Federn 58 spannt. Dies geschieht so lange, bis die Öffnung 79 unter dem flanschartigen Auflagerand 78 vollständig hervorgewandert ist, sodass der fertig befüllte Beutel der Schwerkraft folgend nach unten aus dem Beutelgreifer in Form des schwenkbaren Teils 52 entnommen werden kann. Im einfachsten Fall wird der Beutel auf diese Weise einfach fallengelassen.

Der kombinierte Halter 50 verbleibt vollständig am Transportsystem. Der schwenkbare Teil 52 wird aktiv hochgestellt, und der Zyklus kann mit dem Aufstecken eines neuen Einsetzstücks (gemäß den Figuren 3 ff.) von vorne beginnen.

Im Sinne der hier vorliegenden Patentanmeldung ist in allen Ausführungsbeispielen der "weitere Bearbeitungsschritt" ein Befüllen des gerade geschweißten Beutels.

Im Ausführungsbeispiel nach Figur 1 dienen sowohl die beiden Zentralelektroden 13, 14. als auch die Klemmung an der Klemmstelle 21 als "Einsetzstückverschweißhalter", je nach dem, wie die Anlage genau aufgebaut wird, welche der beiden zur Verfügung stehenden Möglichkeiten also zum Halten des Einsetzstücks vor dem Verschweißen verwendet wird. Im Normalfall wird es das leichteste sein, tatsächlich beide gleichzeitig einzusetzen, denn wenn nur die beiden Zentralelektroden als Halter genutzt würden, wäre es schwierig, den Beutelgreifer 2 anschließend hoch zu schwenken, wenn die Folien bereits auf die kreisrunden Einsetzstücke geschweißt sind.

Im Ausführungsbeispiel der Figuren 3 bis 22 hingegen dienen der verschwenkbare Teil 52 und in einer erweiterten Betrachtung auch der Führungshalter 51 als "Einsetzstückverschweißhalter". Zentralelektroden sind in dieser Ausführungsform nicht vorhanden.

Der Beutelgreifer 2 ist im ersten Ausführungsbeispiel als solcher bezeichnet.

Im Ausführungsbeispiel der Figuren 3 bis 22 ist der schwenkbare Teil der Beutelgreifer.

Alle sind in Baueinheit ausgeführt:
Über das Scharnier 17 bzw. den Schwenkstift 54 sind alle Teile so miteinander verbunden, dass diese gemeinsam mit dem Transportmechanismus entlang der Anlage transportiert werden können.

Die Klemmung im schwenkbaren Teil kann in beiden Ausführungsbespielen sowohl zum Einsetzstückverschweißhalter als auch zum Beutelgreifer gezählt werden.

Ein- und derselbe bewegliche Teil 52 weist außerdem noch in einer zusätzlichen Weise zwei unterschiedliche Haltemechanismen auf: Im Zustand des Verschweißens oder vielmehr direkt danach dient nur die Klemmung als Haltemechanismus für das zu erstellende Produkt. Während des Befüllens dient zumindest zusätzlich die Auflagefläche für den flanschartigen Auflagerand 78 als zweiter, unterschiedlicher Haltemechanismus.

### Bezugszeichenliste:

- 1: Zentralelektrodenhalter
- 2: Beutelgreifer
- 3: Kunststoffblock
- 4: Bohrung
- 5: Oberseite
- 6: Zentrierungsbauteil
- 7: Abschrägung
- 8: Einlauf
- 9: Rückseite
- 10: Schiene
- 11: Zentrierblock
- 12: Schraube
- 13, 14: Zentralelektroden
- 15: Stirnseite der Zentralelektrode
- 16: Vorderseite
- 17: Scharnier
- 18: untere Klemmscheibe
- 19: obere Klemmscheibe
- 20: Hubbegrenzer
- 21: Klemmstelle
- 22: Ausnehmung
- 23: Kunststoffröhrchen
- 24: Spalt
- 25: Innenseite
- 26: Fixierung
- 27: Hubbohrung
- 28: Vorspannungsfeder
- 29: Aufzieheingriff
- 30: Beutel
- 31: Unterseite
- 32: Befüllseite
- 40: Anlage
- 50: kombinierter Halter
- 51: Führungshalter
- 52: schwenkbarer Teil
- 53: Nut
- 54: Schwenkstift
- 55: Basis
- 56: Bolzen
- 57: Bolzen
- 58: Feder
- 59: Riegel
- 60: Durchlaufbohrung
- 61: Schenkel
- 62: Klemmrichtung
- 63, 64: Anschlagflächen
- 65: Trägeradapter
- 66: Klemmscheibe
- 67: Stift
- 68: schiffchenförmiges Einsetzstück
- 69: Dorn
- 70: Schieber
- 71: Rückseite
- 72: Spitze
- 73: Vorderseite
- 74: Frontfläche
- 75: Fixierungsbohrung
- 76: Aufziehkraftbohrung
- 77: Einfüllöffnung
- 78: Auflagerand
- 79: Öffnung
- 80: Auflagefläche

## Patentansprüche

1. Anlage zum Verschweißen von Folie mit einem Einsetzstück aus Kunststoff zu einem Beutel (30) sowie zum Befüllen des Beutels (30), wobei das Befüllen in einem Durchlauf durch die Anlage nach dem Verschweißen liegt, wobei für das Befüllen ein Beutelgreifer (2) vorgesehen ist, **dadurch gekennzeichnet, dass** zum Verschweißen ein Einsetzstückverschweißhalter in Form einer Zentralelektrode (13, 14) vorgesehen ist, auf welche das Einsetzstück zum Einschweißen in den Beutel (30) aufgesteckt wird, sodass das Einsetzstück zum Verschweißen mit der Folie in Position gehalten wird, und, dass der Einsetzstückverschweißhalter und der Beutelgreifer (2) in Baueinheit als ein kombiniertes Bauelement ausgeführt sind, mit zwei Teilen mit unterschiedlichen Funktionen, also mit einem ersten Teil zum Halten des Einsetzstücks und mit einem zweiten Teil zum Halten des Beutels (30), wobei innerhalb des kombinierten Bauelements vom ersten Teil zum zweiten Teil zwischen dem Verschweißen und dem Befüllen eine Übergabe erfolgt.

2. Anlage nach Anspruch 1, ***dadurch gekennzeichnet, dass*** der Einsetzstückverschweißhalter einen Zentralelektrodenhalter (1) aufweist, also einen Halter für eine Zentralelektrode (13, 14), welche das Einsetzstück zum Verschweißen hält.

3. Anlage nach einem der vorstehenden Ansprüche, ***dadurch gekennzeichnet, dass*** der Beutelgreifer (2) ein Schwenklager aufweist.

4. Anlage nach einem der vorstehenden Ansprüche, ***dadurch gekennzeichnet, dass*** der Beutelgreifer (2) ein linear verschiebbares Klemmelement mit einer Federvorspannung aufweist.

5. Anlage nach einem der vorstehenden Ansprüche, ***dadurch gekennzeichnet, dass*** der Einsetzstückverschweißhalter und der Beutelgreifer (2) gegeneinander schwenkbar gestaltet sind, also relativ zueinander.

6. Anlage nach Anspruch 5, ***dadurch gekennzeichnet, dass*** ein Transportmittel von einer Verschweißstation zu einer Befüllstation führt, und zwar durchgehend, also frei von einer Übergabe auf ein weiteres Transportmittel,
wobei der Einsetzstückverschweißhalter einen Zentralelektrodenhalter (1) mit einer Zentralelektrode (13, 14) aufweist
und der Zentralelektrodenhalter (1) und der Beutelgreifer (2) an der Verschweißstation gemäß einer ersten Ausrichtung ausgerichtet sind, nämlich zum Halten des Einsetzstücks in horizontaler Anordnung, sodass der Beutel (30) in dieser Ausrichtung verschweißt werden kann,
wohingegen der Beutelgreifer (2) - nicht aber der Zentralelektrodenhalter (1) - an der Befüllstation eine andere Ausrichtung aufweist als an der Verschweißstation, sodass der Beutel (30) in vertikaler Ausrichtung befüllt werden kann.

7. Anlage nach einem der vorstehenden Ansprüche, wobei zum Verschweißen eine Verschweißstation und für das Befüllen eine Befüllstation vorgesehen sind,
wobei ein Transportmittel von der Verschweißstation zu der Befüllstation führt, und zwar durchgehend, also frei von einer Übergabe auf ein weiteres Transportmittel,
wobei die Anlage längserstreckt aufgebaut ist, mit einer ersten und einer zweiten Seite, wobei die beiden Seiten jeweils eine lineare Transportstrecke bereitstellen und stirnseitig zwischen der ersten und der zweiten Seite jeweils eine Umkehr des Transportmittels erfolgt, sodass ein einziges Transportmittel den gesamten Transport bewerkstelligt,
***dadurch gekennzeichnet, dass***
die Verschweißstation auf der ersten und die Befüllstation auf der zweiten Seite angeordnet sind.

8. Verfahren zum Verschweißen von Folie mit einem Einsetzstück aus Kunststoff zu einem Beutel (30) sowie zum Befüllen des Beutels (30) zeitlich nach dem Verschweißen, wobei zum Verschweißen ein Einsetzstückverschweißhalter vorgesehen ist und für das Befüllen ein Beutelgeifer (2) vorgesehen ist, ***dadurch gekennzeichnet, dass*** der Einsetzstückverschweißhalter und der Beutelgreifer (2) miteinander und mit einem Zentralelektrodenhalter (1) vorwärts bewegt werden.

9. Verfahren nach Anspruch 8, ***dadurch gekennzeichnet, dass*** der Beutelgreifer (2) zwischen dem Verschweißen und dem Befüllen gegenüber der Horizontalen verschwenkt wird, wohingegen der Einsetzstückverschweißhalter gegenüber der Horizontalen seine Lage beibehält.

## Claims

1. System for welding films with an insert piece made of plastic for a bag (30) and for filling this bag (30), the filling taking place in a passage through the system after welding,
where a bag gripper (2) is provided for filling, **characterized in that** for welding, an insert-piece welding holder in the form of a central electrode (13, 14) is provided on which the insert piece for welding into the bag (30) is plugged on so that the insert piece is held in position for welding with the film,
and **in that**
the insert-piece welding holder and the bag gripper (2) are embodied as a combined building element in a building unit, having two components with different functions, a first component for holding the insert piece and a second component for holding the bag (30),
with a transfer taking place within the combined building element from the first component to the second component between welding and filling.

2. System according to Claim 1, **characterized in that** the insert-piece welding holder has a central electrode holder (1), i. e. a holder for a central electrode (13, 14), holding the insert piece for welding.

3. System according to one of the above Claims, **characterized in that** the bag gripper (2) has a drag bearing.

4. System according to one of the above Claims, **characterized in that** the bag gripper (2) has a clamping element displaceable in a linear direction, having a spring pretension.

5. System according to one of the above Claims, **characterized in that** the insert-piece welding holder and the bag gripper (2) are swivelable in relation to one another.

6. System according to Claim 5, **characterized in that** a means of transport leads from a welding station to a filling station, namely continuously, i. e. free from transfer to another means of transport,
the insert-piece welding holder having a central-electrode holder (1) with a central electrode (13, 14)
and the central-electrode holder (1) and the bag gripper (2) being oriented in a first orientation at the welding station, namely for holding the insert piece in a horizontal arrangement so that the bag (30) can be welded in this orientation,
whereas the bag gripper (2) - but not the central-electrode holder (1) - has a different orientation at the filling station than at the welding station so that the bag (30) can be filled in vertical orientation.

7. System according to one of the above Claims, a welding station being provided for welding and a filling station for filling,
where a means of transport leads from the welding station to the filling station, namely continuously, i. e. free from transfer to another means of transport,
with the system being structured in longitudinal extension, having a first and a second side, the two sides providing a linear transport path each and a reversal of the transport means taking place at the end faces between the first and the second side so that a single means of transport performs all of the transport,
**characterized in that**
the welding station is arranged on the first side and the filling station on the second side.

8. Method for welding films with an insert piece made of plastic to a bag (30) and for filling the bag (30) after welding, with an insert-piece welding holder being provided for welding and a bag gripper (2) being provided for filling, **characterized in that** the insert-piece welding holder and the bag gripper (2) are moved forward together and with a central-electrode holder (1).

9. Method according to Claim 8, **characterized in that** the bag gripper (2) is swiveled with reference to the horizontal direction between welding and filling, whereas the insert-piece welding holder maintains its position with reference to the horizontal direction.

## Revendications

1. Installation de soudage de film avec une pièce d'insertion en matière plastique pour le formage d'un sac (30) et pour le remplissage du sac (30), le remplissage ayant lieu après le soudage dans un passage traversant l'installation,
dans lequel, il est prévu pour le remplissage un préhenseur de sac (2),
**caractérisé en ce qu'**il est prévu pour le soudage un support de soudage de pièce d'insertion sous forme d'une électrode centrale (13, 14) sur laquelle la pièce d'insertion est fichée pour soudage dans le sac (30), de sorte que la pièce d'insertion est maintenue en position pour soudage avec le film,
et que le support de soudage de pièce d'insertion et le préhenseur de sac (2) sont réalisés en une unité de construction sous forme d'un élément de construction combiné comportant deux pièces aux fonctions différentes, dont une première pièce pour maintenir la pièce d'insertion et une seconde pièce pour maintenir le sac (30),
dans lequel, à l'intérieur de l'élément de construction combiné, un transfert a lieu de la première pièce vers la seconde pièce entre le soudage et le remplissage.

2. Installation selon la revendication 1, **caractérisée en ce que** le support de soudage de pièce d'insertion présente un support d'électrode centrale (1), donc un support pour une électrode centrale (13, 14) qui maintient la pièce d'insertion à souder.

3. Installation selon une des revendications précédentes, **caractérisée en ce que** le préhenseur de sac (2) présente un palier pivotant.

4. Installation selon une des revendications précédentes, **caractérisée en ce que** le préhenseur de sac (2) présente un élément de serrage déplaçable linéairement ayant une précontrainte de ressort.

5. Installation selon une des revendications précédentes, **caractérisée en ce que** le support de soudage de pièce d'insertion et le préhenseur de sac (2) sont conçus pour être pivotables l'un par rapport à l'autre, donc relativement l'un à l'autre.

6. Installation selon la revendication 5, **caractérisée en ce qu'**un moyen de transport va d'une station de soudage à une station de remplissage et ce en continu, donc sans transfert à un autre moyen de transport,
le support de soudage de pièce insertion présentant un support d'électrode centrale (1) comportant une électrode centrale (13, 14)
et le support d'électrode centrale (1) et le préhenseur de sac (2) étant orientés à la station de soudage suivant une première orientation, à savoir pour maintenir la pièce d'insertion en disposition horizontale de manière à ce que le sac (30) puisse être soudé dans cette orientation,
le préhenseur de sac (2) - mais pas le support d'électrode centrale (1) - présentant par contre à la station de remplissage une orientation autre qu'à la station de soudage de manière à que le sac (30) puisse être rempli en orientation verticale.

7. Installation selon une des revendications précédentes, dans laquelle, il est prévu pour le soudage une station de soudage et pour le remplissage une station de remplissage,
un moyen de transport allant de la station de soudage à la station de remplissage et ce en continu, donc sans transfert à un autre moyen de transport,
l'installation ayant une structure étirée en longueur avec une première et une seconde faces, les deux faces constituant respectivement un parcours de transport linéaire et une inversion du moyen de transport ayant lieu respectivement sur la face avant entre la première et la seconde faces, de sorte qu'un seul moyen de transport effectue la totalité du transport,
**caractérisée en ce que**
La station de soudage est disposée sur la première et la station de remplissage sur la seconde face.

8. Procédé de soudage de film avec une pièce insertion en plastique pour former un sac (30) et de remplissage du sac (30) chronologiquement après le soudage, dans lequel il est prévu pour le soudage un support de soudage de pièce d'insertion et pour le remplissage un préhenseur de sac (2), **caractérisé en ce que** le support de soudage de pièce d'insertion et le préhenseur de sac (2) sont déplacés vers l'avant ensemble avec un support d'électrode centrale (1).

9. Procédé selon la revendication 8, **caractérisé en ce que** le préhenseur de sac (2) est pivoté par rapport à l'horizontale entre le soudage et le remplissage, tandis que le support de soudage de pièce d'insertion garde sa position par rapport à l'horizontale.
